Europäisches Patentamt

European Patent Office

Office européen des brevets

(19)

(11) Numéro de publication: **0 025 586**
**B1**

(12) # FASCICULE DE BREVET EUROPEEN

(45) Date de publication du fascicule du brevet: **14.12.83**

(51) Int. Cl.³: **G 02 B 7/26**

(21) Numéro de dépôt: **80105403.2**

(22) Date de dépôt: **10.09.80**

(54) Dispositif de couplage optique.

(30) Priorité: **16.06.80 CH 4606/80**
**14.09.79 CH 8328/79**

(43) Date de publication de la demande:
**25.03.81 Bulletin 81/12**

(45) Mention de la délivrance du brevet:
**14.12.83 Bulletin 83/50**

(84) Etats contractants désignés:
**AT BE CH DE FR GB IT LI LU NL SE**

(56) Documents cités:
**FR - A - 1 386 962**
**US - A - 4 102 579**

**IBM – Technical Discl. Bull. Vol. 21, No. 4 (1978)**
**p. 1685**

(73) Titulaire: **CABLES CORTAILLOD S.A.**
**CH-2016 Cortaillod (CH)**

(72) Inventeur: **Benoit, Pierre**
**Potat-Dessus 21**
**CH-2016 Cortaillod (CH)**
Inventeur: **Pellaux, Jean-Paul**
**Petits Chênes 2**
**CH-2000 Neuchatel (CH)**
Inventeur: **Widmer, Gilbert**
**Rue du Pont-de-Vaux 8**
**CH-2525 Le Landeron (CH)**
Inventeur: **Kerllenevich, Betty**
**294, Sarmiento B.B.**
**Bahia Blanca (AR)**
Inventeur: **Coche, André**
**Rue d'Offendorf 1**
**F-67000 Strasbourg (FR)**

(74) Mandataire: **Nithardt, Roland**
**CABINET ROLAND NITHARDT Rue Edouard**
**Verdan 15**
**CH-1400 Yverdon (CH)**

Courier Press, Leamington Spa, England.

Dispositif de couplage optique

La présente invention a pour objet un dispositif de couplage optique d'au moins deux conducteurs de lumière, comprenant un corps solide dont au moins une partie est constituée par un demi-ellipsoïde de révolution en matière transparente, au moins dans la gamme de longueur d'onde de la lumière transmise par ces conducteurs de lumière, l'extrémité de l'un de ces conducteurs de lumière étant placée à l'un des foyers de ce demi-ellipsoïde, l'extrémité d'un autre de ces conducteurs étant placée à l'autre foyer, et les axes optiques des extrémités des deux conducteurs, dont les extrémités sont placées aux foyers du demi-ellipsoïde, étant orientés de façon telle qu'un faisceau lumineux divergent, émis par l'extrémité de l'un de ces conducteurs, se transforme, après avoir subi une réflexion totale du coté de l'intérieur du demi-ellipsoïde, sur l'interface convexe entre ce dernier et le milieu ambiant, en un faisceau convergent sur l'extrémité de l'autre conducteur.

Des dispositifs qui décrivent des organes ayant une surface réfléchissante ellipsoïdale utilisée pour coupler entre elles deux fibres optiques aboutissant respectivement aux foyers de cette surface, sont déjà connus par le brevet français no 1 386 962 et par le IBM Technical Disclosure Bulletin, vol. 21, no 4 (1978), page 1685.

L'invention a pour but d'utiliser un tel dispositif pour intervenir sur le faisceau lumineux transmis par l'une des fibres dans la zone de couplage des deux faisceaux.

A cet effet, le dispositif selon l'invention est caractérisé en ce qu' une pièce de base est accolée à ce demiellipsoïde sur le plan médian contenant les foyers de l'ellipse génératrice, les extrémités desdits conducteurs de lumière étant enrobées dans cette pièce de base et, en ce que ledit demi-ellipsoïde comporte une fente pratiquée de manière à permettre d'intercaler, sur le trajet dudit faisceau, des moyens agencés pour modifier le faisceau lumineux transmis par ce dispositif de couplage.

Ainsi, dans ce dispositif, l'élément fonctionel principal est constitué par une masse transparente compacte, d'un seul tenant, qui peut être facilement réalisée par simple coulage d'une matière liquide ou pâteuse, telle qu'une résine synthétique thermoplastique fondue, un mélange précurseur d'une résine synthétique thermodurcissable avec durcissement ultérieur de la pièce ainsi obtenue, ou du verre.

L'invention a également pour objet l'utilisation de ce dispositif comme atténuateur de la lumière, ou comme interrupteur électro-optique.

L'utilisation comme atténuateur de lumière ou comme interrupteur électro-optique présente l'avantage de supprimer toute intervention mécanique pour modifier le faisceau lumineux.

L'invention sera mieux comprise à la lumière de la description détaillée qui va suivre et en se référant au dessin annexé dans lequel:

La figure 1 est une vue schématique, en élévation d'un dispositif de couplage optique similaire a ceux déjà connus.

La figure 2 est une vue schématique d'une premierè forme d'exécution du dispositif de couplage selon l'invention, également représenté en élévation.

La figure 3 est une vue schématique, toujours en élévation, d'une deuxième forme d'exécution du dispositif.

La figure 4 est une vue en plan du dispositif conformément à la forme d'exécution représentée à la fig. 3,

La figure 5 représente une vue en coupe schématique du dispositif de couplage équipé d'un atténuateur de lumière à cristaux liquides.

La figure 6 représente une vue en coupe agrandie du dispositif atténuateur logé dans la fente du dispositif de couplage de la fig. 5,

La figure 7 représente un schéma de la courbe de transmission de la lumière à travers le dispositif atténuateur de la fig. 6, et

La figure 8 représente une autre courbe de transmission de la lumière obtenue dans d'autres conditions expérimentales.

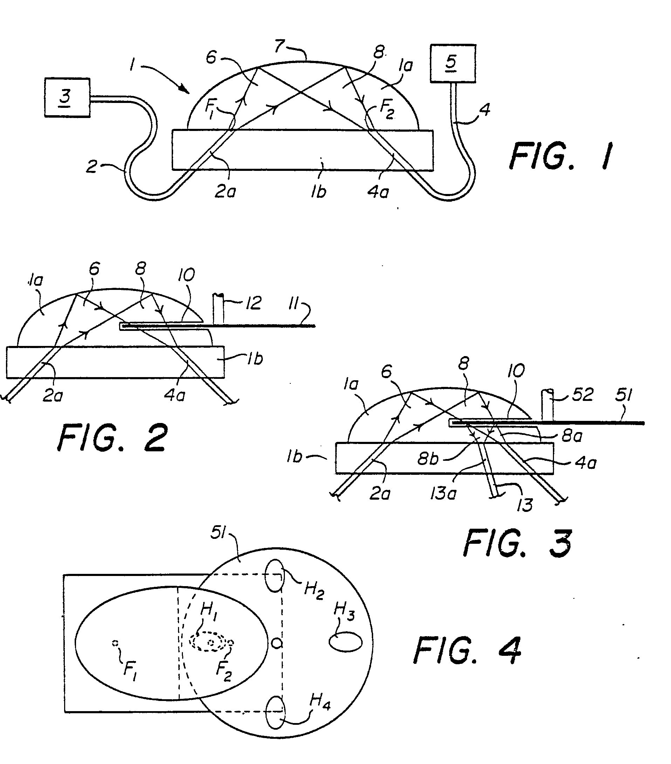

Le dispositif représenté à la fig. 1 comprend un corps solide 1, composé d'un demi-ellipsoïde de révolution la et d'une pièce de base 1b. Le demi-ellipsoïde la est en une matière transparente, au moins dans la gamme de longueur d'onde de la lumière transmise par les conducteurs de lumière.

Un premier conducteur de lumière 2, par exemple une fibre optique gaînée, relié à une source de lumière 3, a son tronçon d'extrémité 2a enrobé dans la pièce de base 1b et aboutissant exactement à l'un des foyers $F_1$ du demi-ellipsoïde la. Un deuxième conducteur de lumière 4, également constitué, par exemple, par une fibre optique gaînée, est relié à un appareil détecteur de lumière 5 permettant de mesurer l'intensité de la lumière transmise par ce conducteur 4. Le tronçon d'extrémité 4a du conducteur de lumière 4 est également enrobé dans la pièce de base 1b et il aboutit à l'autre foyer $F_2$ du demi-ellipsoïde 1a. Les axes optiques des tronçons 2a et 4a des conducteurs de lumière respectifs 2 et 4 sont orientés symétriquement par rapport au plan médian entre les foyers $F_1$ et $F_2$, de sorte que le faisceau lumineux divergent 6, émis par le conducteur 2, se transforme, après avoir subi une réflexion totale sur la plage 7 de l'interface entre le demi-ellopsoïde la et le milieu ambiant, en un faisceau convergent sur l'extrémité du tronçon 4a du conducteur placée au foyer $F_2$. Les tronçons 2a et 4a des conducteurs de lumière sont avantageusement mis en place dans la pièce de base 1b avant l'assemblage ou la coulée du demi-ellipsoïde 1a.

La source de lumière 3 est avantageusement constituée par une diode électroluminescente ou une diode laser. Le détecteur de lumière 5 comprend avantageusement une cellule photoélectrique sensible dans le domaine de longueur d'onde de la lumière émise par la source 3.

Le corps solide 1 est avantageusement constitué par une seule pièce moulée exemple en résine synthétique transparente, par exemple en résine époxy ou en résine acrylique, comprenant le demi-ellipsoïde 1a et la pièce de base 1b. Toutefois, il n'est pas nécessaire que la pièce de base 1b soit transparente. Cette dernière pièce pourrait même ne pas être présente et être remplacée par tout autre moyen adéquat pour maintenir les tronçons d'extrémité des conducteurs de lumière, notamment les tronçons 2a et 4a, en position fixe appropriée par rapport au demi-ellipsoïde transparent 1a.

Lorsqu'il vient à se produire, dans le milieu en contact avec la plage 7 de la face convexe du demiellipsoïde 1a sur laquelle le faisceau divergent incident 6 subit la réflexion totale, une variation telle que l'indice de réfraction de ce milieu soit modifié, par exemple par remplacement du milieu initial par un autre milieu ayant un autre indice de réfraction (par exemple dans le cas où la plage 7 de la face du demi-ellipsoïde 1a, initialement en contact avec l'air, est immergée dans un liquide tel que de l'huile minérale), l'intensité du faisceau incident 6 étant maintenue constante, l'intensité de la lumière transmise par le dispositif de couplage, c'est-à-dire l'intensité de la lumière captée par le tronçon 4a du conducteur de sortie 4, subit une variation correspondant à cette variation d'indice.

On peut mettre à profit cette variation d'intensité de la lumière transmise, en utilisant le dispositif dans un appareil de détection. Par exemple, dans le cas où ladite variation d'indice résulte de la variation du niveau d'un liquide, on peut mettre à profit la détection de la variation de l'indice de réfraction qui se produit lorsque la plage 7 du demiellipsoïde 1a, initialement placée dans l'air au-dessus du niveau du liquide, en position fixe, se trouve immergée dans un liquide par suite d'une élévation du niveau de celui-ci, dans un appareil de détection de niveau d'un liquide, notamment dans un appareil de détection de niveau d'une huile minérale.

La première forme d'execution, représentée à la fig. 2 a un agencement d'ensemble similaire à celui du dispositif de la fig. 1. Elle diffère de ce dernier uniquement en ce qu'elle comprend une fente 10, ménagée dans le demi-ellipsoïde 1a parallèlement au plan médian de base de celui-ci, et un disque 11, présentant une pluralité de plages (non représentées) ayant les unes par rapport aux autres des propriétés d'absorption lumineuses différentes. Le disque 11 est agencé de manière à pouvoir tourner autour d'un axe 12 orienté perpendiculairement au plan médian de base du demi-ellipsoïde 1a. Ainsi, lorsque le disque 11 tourne, ces différentes plages viennent se placer successivement à l'intérieur de la fente 10, sur le trajet du faisceau réfléchi 8. Les différentes plages du disque 11 fonctionnent ainsi comme des filtres d'intensité lumineuse ayant différentes densités optiques et le dispositif constitue, dans son ensemble, un coupleur-atténuateur optique pour conducteurs de lumière.

Le dispositif représenté à la fig. 3 est, également, similaire aux dispositifs représentés aux fig. 1 et 2. En particulier, comme le dispositif de la fig. 2, il comprend une fente 10 parallèle au plan médian de base du demi-ellipsoïde 1a. Toutefois, au lieu d'un disque tournant 11 absorbant, il est muni d'un disque 51 tournant autour d'un axe 52 et portant plusieurs réseaux de diffraction, par exemple quatre réseaux holographiques $H_1$, $H_2$, $H_3$ et $H_4$ (fig. 4), qui permettent de séparer le faisceau réfléchi 8 en deux faisceaux partiels 8a et 8b, dont l'un (8a) suit le même trajet que la partie initiale correspondante du faisceau 8, en convergeant donc sur l'extrémité du tronçon d'extrémité 4a de la fibre optique 4 placée au fover $F_2$ du demi-ellipsoïde 1a, et dont l'autre (8b) converge sur l'extrémité d'une autre fibre optique 13, dont le tronçon d'extrémité 13a est enrobé dans la pièce de base 1b du corps 1. La somme des intensités des faisceaux lumineux 8a et 8b est égale à l'intensité du faisceau réfléchi 8.

Le dispositif représenté aux fig. 3 et 4 constitue un coupleur du type dit "Jonction Y" pour conducteurs de lumière et présente, par rapport aux coupleurs optiques antérieurement connus, l'avantage de permittre le raccordement d'un conducteur de lumière à deux autres conducteurs de lumière, sans perturber les conditions de propagation lumineuse dans le guide d'onde. La préparation des lentilles holographiques $H_1$ à $H_4$ de ce dispositif (lentilles dont le nombre pourrait être supérieur à quatre, compte tenu des dimensions de la plage du faisceau réfléchi 8 intersectée par le disque 51 et du diamètre de ce dernier) peut être effectuée soit avant l'assemblage du disque 51, soit après cet assemblage. Cette dernière manière de procéder (formation des lentilles holographiques in situ), qui présente l'avantage de simplifier considérablement les réglages optiques du coupleur, peut être semblable à celle qui est décrite dans le brevet suisse No 626 729, dont le contenu est incorporé par référence à la présente description.

En utilisant des lentilles comportant une superposition de diffraction, par exemple des lentilles holographiques, on peut réaliser, de manière similaire à la réalisation du coupleur à jonction "Y" représenté aux fig. 3 et 4, un coupleur à jonctions multiples ou étoile, comme l'homme de l'art le déduira à la lumière de la description qui figure également dans le brevet suisse précité.

L'utilisation d'un dispositif mécanique, tel que le dispositif filtrant rotatif décrit en référence à la fig. 2, nécessite tout un environnement mécanique encombrant pour permettre le maintien et le déplacement du disque. En outre, le nombre de plages est forcément limité et l'accroissement de ce nombre entraîne nécessairement une augmentation de l'encombrement du système.

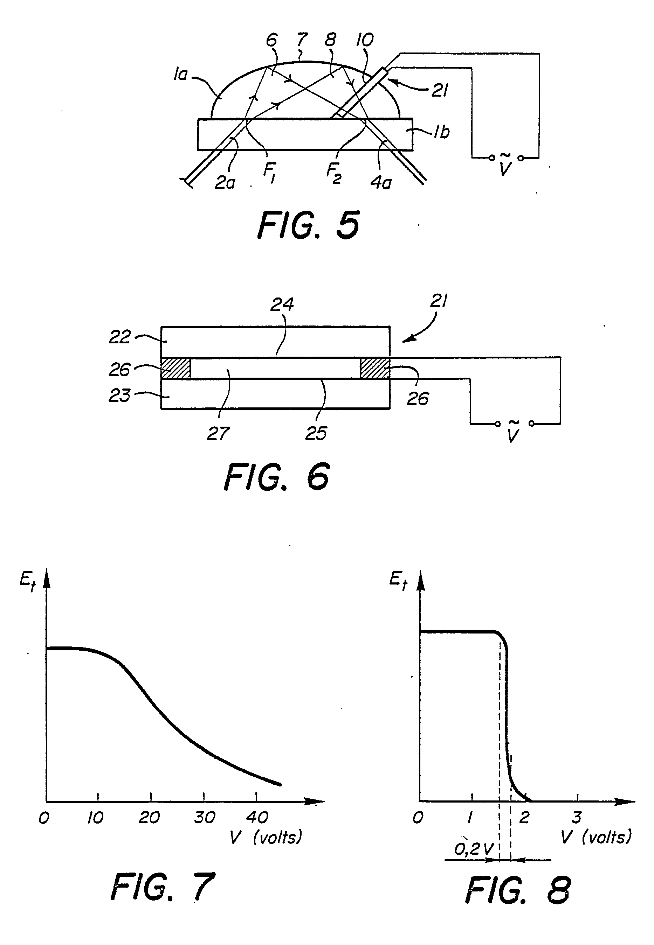

Le dispositif décrit ci-dessous, en référence aux fig. 5 et 6, se propose de remédier à ces inconvénients en réalisant un dispositif du type susmentionné, dans lequel il est possible d'obtenir à volonté une atténuation partielle ou une obturation totale de la lumière réfléchie, sans que l'on soit obligé d'intervenir mécaniquement sur un filtre ou un obturateur logé dans la fente.

En référence à la fig. 5, le dispositif de couplage optique se compose du demi-ellipsoïde de révolution la en matière transparente et de la base 1b décrite plus en détail dans le brevet susmentionné. Un tronçon d'extrémité 2a est enrobé dans la pièce de base 1b, en aboutissant exactement au foyer $F_1$ du demi-ellipsoïde 1a. Il émet un faisceau lumineux divergent 6 qui, après avoir subi une réflexion totale sur la plage 7 de l'interface entre le demi-ellipsoïde 1a et le milieu ambiant, se transforme en un faisceau convergent 8 sur l'extrémité du conducteur de lumière, dont le tronçon d'extrémité 4a aboutit au foyer $F_2$. La fente 10, ménagée dans le demi-ellipsoïde 1a (éventuellement parallèlement au plan médian de la base du démiellipsoïde 1a), permet d'introduire un dispositif atténuateur ou obturateur à cristaux liquides 21, relié extérieurement à une source de tension alternative V et décrit plus en détail en référence à la fig. 6.

La fig. 6 illustre plus en détail le dispositif atténuateur de lumière 21 qui est glissé dans la fente 10 du demi-ellipsoïde 1a. Il se compose essentiellement de deux lames transparentes 22 et 23, rendues conductrices sur leurs faces intérieurs 24 et 25 et séparées par des cales d'écartement 26. Entre les lames transparentes 22 et 23, se trouve une couche de cristal liquide nématique, qui est en contact avec les faces conductrices 24 et 25 des lames transparentes 22 et 23. Ces lames peuvent être constituées par deux plaques de quartz ou de verre rendues conductrices sur leurs faces intérieures par métallisation ou pulvérisation d'oxyde d'indium ($In_2O_3$) ou d'étain ($SnO_2$). Les faces intérieures conductrices 24 et 25 des plaques transparentes 22 et 23 sont connectées à une source de tension alternative V (représentée schématiquement).

Lorsque la couche de cristal liquide 27 est constituée par une substance nématique d'anisotropie diélectrique négative, la courbe de transmission de la lumière, en fonction de la différence de potentiel appliquée aux électrodes 24 et 25, a l'aspect représenté par la fig. 7. On constate que selon la tension appliquée, l'atténuation est plus ou moins grande, c'est-à-dire qu'on peut obtenir une atténuation progressive en modifiant la différence de potentiel entre les deux faces conductrices. En pratique, la gamme d'atténuation utile correspond à une variation de la différence de potentiel de l'ordre de quelques dizaines de volts.

Lorsque la couche de cristal liquide est constituée par un nématique dit "twisté", c'est-à-dire qui a subi une torsion de sorte que les orientations de ses molécules, au niveau des électrodes transparentes, soient perpendiculaires, la courbe de transmission correspond au graphique de la fig. 8. Dans ce cas, l'attention est très brutale et l'atténuateur fonctionne, dans ce cas, plutôt comme un interrupteur. Ce dispositif travaille en lumière polarisée et nécessite par conséquent l'emploi d'un polariseur et d'un analyseur. Il permet par contre de travailler à une tension très basse qui est de l'ordre du volt. Le changement d'état du cristal liquide, permettant d'obtenir une obturation quasi totale, se fait sur une plage de quelques dixièmes de volts, par exemple par une modification de la différence de potentiel de 0,2 volt dans le cas de la fig. 8.

La réalisation pratique du dispositif atténuateur est extrêmement simple. L'épaisseur des cales d'écartement 26, qui peuvent être réalisées sous la forme d'un joint annulaire par exemple, est de l'ordre de 10 $\mu$m. L'ensemble peut constituer un bloc compact étanche et interchangeable, pouvant être introduit dans la fente du demi-ellipsoïde selon les besoins et les conditions expérimentales de l'utilisation. Ce même dispositif de couplage peut ainsi être utilisé à volonté avec un dispositif atténuateur correspondant à la courbe de transmission de la fig. 7, ou un dispositif atténuateur agissant plutôt comme obturateur et correspondant à la courbe de transmission illustrée par la fig. 8.

**Revendications**

1. Dispositif de couplage optique d'au moins deux conducteurs de lumière (2, 4), comprenant un corps solide (1) dont au moins une partie est constituée par un demi-ellipsoïde de révolution (1a) en matière transparente, au moins dans la gamme de longueur d'onde de la lumière transmise par ces conducteurs de lumière, l'extrémité de l'un de ces conducteurs de lumière étant placée à l'un des foyers ($F_1$) de ce demi-ellipsoïde, l'extrémité d'un autre de ces conducteurs étant placée à l'autre foyer ($F_2$), et les axes optiques des extrémités des deux conducteurs, dont les extrémités sont placées aux foyers du demi-ellipsoïde, étant orientés de façon telle qu' un faisceau lumineux divergent, émis par l'extrémité de l'un de ces conducteurs, se tranforme, après avoir subi une réflexion totale du coté de l'intérieur du demi-ellipsoïde, sur l'interface convexe entre ce dernier et le milieu ambiant, en un faisceau convergent sur l'extrémité de l'autre conducteur, caractérisé en ce qu'une pièce de base (1b) est accolée à ce demi-ellipsoïde par le plan médian contenant les foyers de l'ellipse génératrice, les extrémités (2a, 4a) desdits conducteurs de lumière étant enrobées dans cette pièce de base (1b), et que ledit demi-ellipsoïde comporte une fente (10) pratiquée de manière à permettre d'intercaler, sur le trajet dudit faisceau convergent, des moyens agencés pour modifier le faisceau lumineux transmis par ce dispositif de couplage.

2. Dispositif selon la revendication 1, caractérisé en ce que la fente (10) est sensiblement perpendiculaire à la direction d'un rayon moyen du faisceau convergent.

3. Dispositif selon la revendication 1, caractérisé en ce que lesdits moyens, permettant de modifier le faisceau lumineux transmis par le dispositif de couplage, comprennent au moins un filtre d'intensité.

4. Dispositif selon la revendication 3, caractérisé en ce que ledit filtre est placé dans une fente (10) pratiquée dans ledit demi-ellipsoïde (1a) parallèlement au plan médian de base de ce dernier.

5. Dispositif selon la revendication 4, caractérisé en ce que ledit filtre est constitué par un disque (11) présentant une pluralité de plages ayant, les unes par rapport aux autres, des propriétés d'absorption lumineuse différentes, ce disque étant agencé de manière à pouvoir tourner autour d'un avec axe (12) perpendiculaire au plan médian de base du demi-ellipsoïde, de sorte que les différentes plages du disque puissent être placées successivement à l'intérieur de ladite fente (10).

6. Dispositif selon la revendication 1, caractérisé en ce que lesdits moyens, permettant de modifier le faisceau lumineux transmis par le dispositif de couplage, comprennent au moins une lentille holographique (51).

7. Dispositif selon la revendication 6, caractérisé en ce que ladite lentille holographique (51) est placée dans la fente (10) pratiquée dans ledit demi-ellipsoïde (1a), parallèlement au plan médian de base de celui-ci.

8. Dispositif selon la revendication 6, caractérisé en ce que ladite lentille holographique (51) est agencée de manière que l'ordre de diffraction zéro du réseau de diffraction reconstitue un premier faisceau lumineux (8a) convergent vers l'extrémité du conducteur de lumière (4) placée au foyer de l'ellipse génératrice du demi-ellipsoïde (1a), alors que le premier ordre de diffraction reconstitue un second faisceau lumineux (8b) convergent vers l'extrémité d'un autre conducteur de lumière (13).

9. Dispositif selon la revendication 1, caractérisé en ce que lesdits moyens, permettant de modifier le faisceau lumineux transmis par le dispositif de couplage, comprennent un dispositif atténuateur de lumière à cristaux liquides (21).

10. Dispositif selon la revendication 9, caractérisé en ce que le dispositif atténuateur comporte une couche de cristal liquide (27), comprise entre deux plaques transparentes (22, 23) rendues conductrices sur leurs faces intérieures en contact avec le cristal liquide, et des moyens (24, 25) pour appliquer une différence de potential entre lesdites faces opposées conductrices.

11. Dispositif selon la revendication 10, caractérisé en ce que la différence de potentiel est alternative.

12. Dispositif selon la revendication 10, caractérisé en ce que les deux plaques transparentes sont des plaques métallisées sur leurs faces intérieures.

13. Dispositif selon la revendication 10, caractérisé en ce que les plaques transparentes sont rendues conductrices par pulvérisation d'un matériau choisi dans le groupe: oxyde d'indium et oxyde d'étain.

14. Dispositif selon la revendication 10, caractérisé en ce que les cristaux liquides sont des substances nématiques.

15. Dispositif selon la revendication 14, dans lequel la lumière transmise est une lumière polarisée, caractérisé en ce que la couche de cristal liquide a subi une torsion de manière que les orientations des molécules, au niveau des plaques transparentes respectives, soient perpendiculaires.

16. Utilisation du dispositif selon l'une quelconque des revendications 9 à 14, comme atténuateur de la lumière transmise par le dispositif.

17. Utilisation du dispositif selon la revendication 16, comme interrupteur électro-optique.

**Patentansprüche**

1. Vorrichtung zur optischen Kupplung von wenigstens zwei Lichtleitern (2, 4), bestehend aus einem festen Körper (1), von dem wenigstens ein Teil als Rotations-Halbellipsoid (1a) aus einem wenigstens im Wellenlängenbereich das durch diese Lichtleiter übertragenen Lichtes transparenten Material ausgebildet ist, wobei das Ende des einen dieser Lichtleiter in dem einen Brennpunkt (F$_1$), das Ende eines anderen dieser Leiter in dem anderen Brennpunkt (F$_2$) des Halbellipsoids angeordnet sind und die optischen Achsen der Enden der zwei Leiter, deren Enden in den Brennpunkten des Halbellipsoids liegen, so angeordnet sind, daß sich ein vom Ende des einen dieser Leiter ausgehendes divergierendes Lichtbündel nach vollständiger Reflexion an der konvexen Zwischenfläche zwischen dem Halbellispoid und dem umgebenden Medium zur Innenseite des Halbellipsoids hin in ein zum Ende des anderen Leiters konvergierendes Bündel verwandelt, dadurch gekennzeichnet, daß mit diesem Halbellipsoid an der die erzeugende Ellipse enthaltenden Mittelebeneein Basisstück (1b) zusammengefügt ist, in dem die Enden (2a, 4a) der Lichtleiter eingebettet sind, und daß das Halbellipsoid einen Spalt (10) zum Einschieben von zum Abwandeln des durch die Kupplungsvorrichtung geleiteten Lichtbündels geeigneten Mitteln in den Weg des konvergierenden Lichtbündels aufweist.

2. Vorrichtung nach Anspruch 1, dadurch gekennzeichnet, daß der Spalt (10) genau senkrecht zur Richtung eines Mittelstrahles des konvergierenden Bündels verläuft.

3. Vorrichtung nach Anspruch 1, dadurch gekennzeichnet, daß die zum Abwandeln des durch die Kupplungsvorrichtung geleiteten Lichtbündels geeigneten Mittel wenigstens ein Lichtstärkefilter umfassen.

4. Vorrichtung nach Anspruch 3, dadurch gekennzeichnet, daß das Filter in einem im Halbellipsoid parallel zu dessen Basismittelebene vorgesehenen Spalt (10) angeordnet ist.

5. Vorrichtung nach Anspruch 4, dadurch gekennzeichnet, daß das Filter als Scheibe (11) ausgebildet ist, die eine Mehrzahl von Feldern mit untereinander verschiedenen Lichtabsorptions-Eigenschaften aufweist und um eine zur Basismittelebene des Halbellipsoids senkrechte Achse (12) drehbar ist, so daß die verschiedenen Felder der Scheibe nach und nach in das Innere des Spaltes (10) versetzbar sind.

6. Vorrichtung nach Anspruch 1, dadurch gekennzeichnet, daß die zum Abwandeln des durch die Kupplungsvorrichtung geleiteten Lichtbündels geeigneten Mittel wenigstens eine holographische Linse (51) umfassen.

7. Vorrichtung nach Anspruch 6, dadurch gekennzeichnet, daß die holographische Linse im in dem Halbellipsoid (1a) parallel zu dessen Basismittelebene vorgesehenen Spalt (10) angeordnet ist.

8. Vorrichtung nach Anspruch 6, dadurch gekennzeichnet, daß die holographische Linse (51) derart angeordnet ist, daß die Beugung nullter Ordnung des Beugungsnetzes ein erstes Lichtbündel (8a) ergibt, das gegen das im Brennpunkt der erzeugenden Ellipse des Halbellipsoids (1) gelegene Ende des Lichtleiters (4) konvergiert, wogegen die Beugung erster Ordnung ein zweites Lichtbündel mit sich bringt, das gegen das Ende eines anderen Lichtleiters (13) konvergiert.

9. Vorrichtung nach Anspruch 1, dadurch gekennzeichnet, daß die zum Abwandeln des durch die Kupplungsvorrichtung geleiteten Lichtbündels geeigneten Mitteln eine Einrichtung zur Lichtabschwächung aus Flüssigkristallen (21) umfaßt.

10. Vorrichtung nach Anspruch 9, dadurch gekennzeichnet, daß die Einrichtung zur Lichtabschwächung aus einer Flüssigkristallschicht (27), die zwischen zwei transparenten, an ihren Innenflächen in leitendem Kontakt mit dem Flüssigkristall stehenden Platten (22, 23) eingeschlossen ist, sowie aus Mitteln (24, 25) zum Aufbringen einer Potentialdifferenz zwischen diesen einander gegenüberliegenden leitenden Flächen besteht.

11. Vorrichtung nach Anspruch 10, dadurch gekennzeichnet, daß die Potentialdifferenz veränderbar ist.

12. Vorrichtung nach Anspruch 10, dadurch gekennzeichnet, daß die beiden transparenten Platten auf ihren Innenflächen metallisiert sind.

13. Vorrichtung nach Anspruch 10, dadurch gekennzeichnet, daß die transparenten Platten durch Aufstäuben eines aus der Gruppe von Indiumoxyd und Zinnoxyd ausgewählten Materials leitend gemacht sind.

14. Vorrichtung nach Anspruch 10, dadurch gekennzeichnet, daß die Flüssigkristalle nematische Substanzen sind.

15. Vorrichtung nach Anspruch 14, bei der das durchgeleitete Licht polarisiert ist, dadurch gekennzeichnet, daß die Flüssigkristallschicht eine derartige Verdrehung erfahren hat, daß die Ausrichtung der Moleküle in der Ebene der betreffenden transparenten Platten senkrecht ist.

16. Verwendung der Vorrichtung nach einem der Ansprüche 9 bis 14 als Abschwächer des durch die Vorrichtung geleiteten Lichtes.

17. Verwendung nach Anspruch 16 als elektrisch-optischer Unterbrecher.

## Claims

1. An optical coupling device for at least two light conductors (2, 4), comprising a solid body (1) at least a part of which consist of a half-ellipsoid of revolution (1a) made of a material transparent at least in the wavelength range of the light transmitted by these light conductors, means for positioning the end of one of said light conductors at one of the foci ($F_1$) of said half-ellipsoid, second means for positioning the end of a second light conductor at the other focus ($F_2$) of said half-ellipsoid, said positioning means orienting the optical axes of the two conductors whose ends have been placed at the foci of the half-ellipsoid in such a way that a divergent light beam emitted by one of these conductors is transformed, after having undergone a total reflection inside said half-ellipsoid, at the interface between said half-ellipsoid and said ambient medium into a beam converging on the end of the other conductor, characterized in that a base piece (1b) is joined to said half-ellipsoid in the median plane containing the foci of the generating ellipse of said half-ellipsoid, the two light conductors having their ends (2a, 4a) embedded in said base piece (1b) and in that said half-ellipsoid includes a slot (10) formed therein to permit the interposition along the path of said convergent beam of beam modifying means operative to modify a light beam transmitted through said optical coupling device.

2. An optical coupling device according to claim 1, characterized in that said slot (10) is substantially perpendicular to the direction of a median ray of said convergent beam.

3. An optical coupling device according to claim 1, characterized in that said beam modifying means comprises at least one intensity filter.

4. An optical coupling device according to claim 3, characterized in that said filter is placed in a slot (10) cut into said half-ellipsoid (1a) parallel to the median bas plane of said half-ellipsoid.

5. An optical coupling device according to claim 4, characterized in that said filter includes a disk (11) having a plurality of regions having, with respect to each other, different light absorption properties, said disk being rotatable around an axis (12) perpendicular to the median bas plane of said half-ellipsoid whereby different regions of the disk can be placed successively inside said slot (10).

6. An optical coupling device according to claim 1, characterized in that said beam modifying means comprises at least one holographic lens (51).

7. An optical coupling device according to claim 6, characterized in that said holographic lens (51) is positioned in a slot (10) cut into said half-ellipsoid (1a), parallel to the median base plane of said half-ellipsoid.

8. An optical coupling device according to claim 6, characterized in that said holographic lens (51) is designed in such a way that the zero order of diffraction of the diffraction grating reconstitutes a first light beam (8a) converging toward the end of the light conductor (4) placed at the focus of the ellipse generating said half-ellipsoid (1a), while the first order of diffraction reconstitutes a second light beam (8b) converging toward the end of another light conductor (13).

9. An optical coupling device according to claim 1, characterized in that said beam modifying means comprises a liquid-crystal light-attenuating device (21).

10. An optical coupling device according to claim 9, characterized in that said light-attenuating device includes a liquid-crystal layer (27) formed between two transparent plates (22, 23) made conductive along their inner faces in contact with the liquid crystal and electric power means (24, 25) for applying a potential difference between said conductive opposite faces.

11. An optical coupling device according to claim 10, characterized in that said electric power means provides an alternative potential.

12. An optical coupling device according to claim 10 characterized in that said two plates are metallized on their inner faces.

13. An optical coupling device according to claim 10, characterized in that said two plates are made conductive utilizing a material selected from the group: indium oxide and tin oxide.

14. An optical coupling device according to claim 10, characterized in that said liquid-crystal includes nematic substances.

15. An optical coupling device according to claim 14 wherein the light transmitted is polarized light, characterized in that said liquid crystal layer being sensitive to polarized light has undergone a torsion so that the orientations of the molecules at the level of the respective transparent plates are perpendicular.

16. Use of the device according to any one of the claims 9 to 14, as a means of subduing the light transmitted by the device.

17. Use of the device according to claim 16, as an electro-optical switch.

0 025 586

FIG. 1

FIG. 2

FIG. 3

FIG. 4

FIG. 5

FIG. 6

FIG. 7

FIG. 8